# EUROPEAN PATENT APPLICATION

(11) **EP 1 935 635 A1**
(43) Date of publication of application: **25.06.2008**
(21) Application number: 06026409.0
(22) Date of filing: 20.12.2006
(51) Int. Cl.: B32B 27/00, E04F 13/02, E04F 15/12

(54) **Lining and flooring tile and method to make it**

(71) Applicant: BERBRAND S.r.l., 25030 Adro BS (IT)
(72) Inventor: Bertoli, Emanuele, 25030 Adro(BS) (IT)
(74) Representative: Lecce, Giovanni

(57) **Abstract**

A lining and flooring tile (1) including a base portion (2), a central portion (4) and a third portion (6), this base portion (2) consisting of at least one layer obtained with synthetic resin, this central portion (4) consisting of a plate including a plurality of mother-of-pearl flakes (8) and this third portion (6) consisting of a layer of transparent synthetic resin.

## Description

This invention refers to a lining and flooring tile and a method to obtain it.

More particularly, this invention refers to a flooring and lining tile, specially but not particularly suitable for use to line walls and/or floors of homes or other places, as well as a method to make this tile.

In the field of lining and flooring of places, it is known that tiles of different shapes and materials such as ceramic tiles are used.

These tiles, though being generally used and appreciated, feature plain colours or few options for decoration and, moreover, these tiles are mostly matt.

Therefore, the object of this invention is to provide a lining and flooring tile as well as a method to obtain this tile such as to meet the requirements that emerged in connection with the known technique.

According to this invention, this and other objects that will emerge from the following description are achieved by means of a lining and flooring tile that is generally defined in claim 1 and by means of a method to obtain this tile which is generally defined in claim 13.

The structural and functional characteristics of the lining and flooring tile of this invention can be better understood from the description below, wherein reference is made to the figures of the attached drawings which show an embodiment that is meant to be illustrative in character, but is not intended to provide any limitation, and wherein:

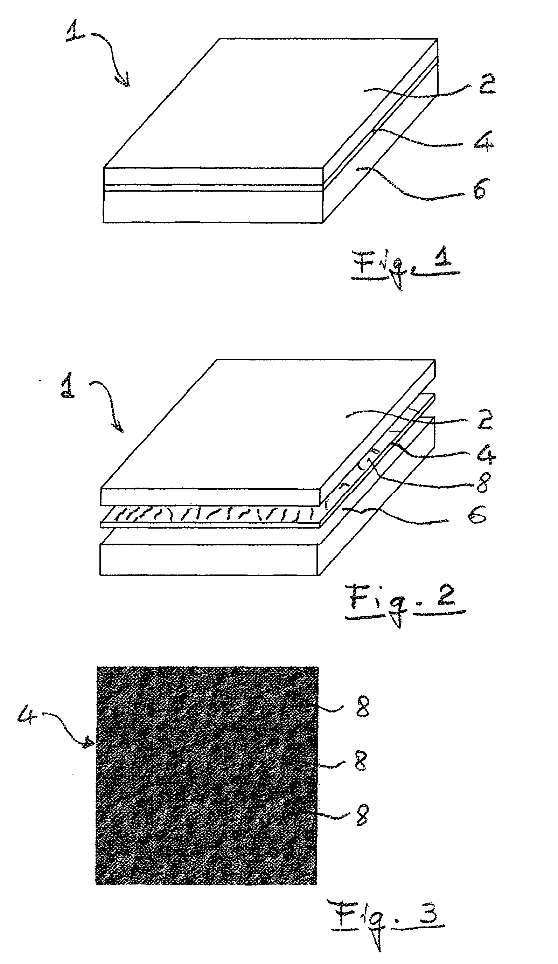

- figure 1 is a schematic axonometric view of a lining and flooring tile of this invention;
- figure 2 is a schematic axonometric view with detached parts of the lining and flooring tile of figure 1;
- figure 3 is a schematic view of a component of the lining and flooring tile of figure 1.

With reference to the attached figures with reference number 1, a lining and flooring tile of this invention is represented as a whole.

According to one embodiment, the lining and flooring tile 1 includes a base portion 2, a central portion 4 and a third portion 6.

The base portion 2 consists of a layer of suitable thickness obtained with synthetic resins, preferably a epoxy resins, e.g. one that is marketed by the company Camattini Spa, which can be loaded with calcium carbonate (CaCo₃) or with other suitable elements in order to obtain special and valuable chromatic and artistic effects; other kind of synthetic resins, such as phenolic resins, unsaturated polyester resins or vinyl-ester resins, could be used. Advantageously, calcium carbonate allows a white colour and an appropriate structural density to be obtained. Advantageously, the thickness value of the base portion 2 ranges between 5 mm and 10 mm and preferably equals 8 mm. The amount of calcium carbonate varies from 1000g to 3000g of CaCo₃ on 1200g of epoxy resin and preferably equals 2000g.

The central portion 4 consists of a plate of appropriate thickness including a plurality of mother-of pearl flakes 8 which are in turn obtained from shells according to methods that are known in themselves and, hence, not described herein. These cultured mother-of-pearl flakes 8 are glued to one another until a plate of suitable size is obtained. The gluing of the flakes 8 is made by means of a microgluing process which guarantees the desired resistance.

Advantageously, the flakes 8 present a thickness value comprised between 0,1 mm and 5 mm and preferably equal to 0,2/2 mm. Preferably, the plate is a rectangle of 240 mm in length and 140 mm in width.

The third portion 6 consists in a layer of suitable thickness obtained with a transparent synthetic resin and preferably a epoxy resin which, once hardened, presents a hardness that suits the intended use of the tile. For instance, the third portion 6 presents a shore D/15 hardness ranging between 68 and 72. The outward surface of the tile is finished by means of passes of abrasive paper featuring 600 or 800 in particle size. Advantageously, this surface is polished until it shines by means of a wad and abrasive paste.

Advantageously, the lining or flooring tile 1 of this invention is made in the shapes and sizes that are standard for tiles intended for the same purpose.

The lining and flooring tile 1 of this invention is obtained through a method that includes the following steps:
a) turn the shells into flakes 8 after a careful selection;
b) glue the flakes 8, by microgluing, so as to obtain a plate;
c) place into a mould a fixed quantity of epoxy resin loaded with calcium carbonate to obtain the base portion 2;
d) wait until the epoxy resin becomes a gel at an advanced stage;
e) place onto the epoxy resin, which has become a gel, the plate obtained in the previous steps a) and b) to obtain the central portion 4;
f) arrangement, by casting, of a preset amount of transparent epoxy resin to obtain the third portion 6 and its hardening;
g) finish the surface of the third portion 6 through abrasive paper;
h) polish the third portion 6 until it shines through a wad and abrasive paste.

It has to be noticed that steps a) and b) to obtain the plate that will become the central portion 4 may be carried out separately from the following stages; in other words, the plate, obtained through steps a) and b) can be obtained separately and then used in the construction of the tile starting from stage c).

As an example, to obtain a square tile with a 200 mm long side, a size that is standard both for lining and flooring tiles, for the base portion 2 a loaded quantity of epoxy resin including 1200g of epoxy resin and 2000g of calcium carbonate, for the central portion 4 a mother-of-pearl plate in the size of a tile and, finally, for the third portion 6, a quantity of epoxy resin of 600g have been used. With these compositions a tile has been obtained having the base portion 2 that is 8 mm in thickness, the central portion 4 that is 0,2 mm in thickness and the third portion 6 that is 4 mm in thickness for an overall thickness of the lining and flooring tile 1 of about 12 mm.

Advantageously, the lining and flooring tile 1 of this invention has proved to be particularly suitable for use not only to line walls or floors of interiors of homes or other places, but also to line places like, for instance, swimming pools.

Surprisingly, the lining and flooring tile 1 presents a special chromatic effect due to the natural transparency and transluminosity of the mother-of-pearl reduced into flakes of very small thickness.

As one can understand from the foregoing description, the lining and flooring tile 1 of this invention presents special chromatic and decorative effects and has proved to be particularly effective to create lining and/or floors featuring pleasant aesthetical patterns.

Although this invention has been described with reference to one embodiment, which has only been provided for the purpose of illustration and example, but which is not meant to limit the scope of the invention, many variations and changes will be obvious to anybody skilled in the art in the light of the foregoing disclosure. Hence, this invention is intended to include all those changes and variations that fall within the spirit and the protective scope of the attached claims.

## Claims

1. A lining and flooring tile (1) comprising a base portion (2), a central portion (4) and a third portion (6), the said base portion (2) consisting of at least one layer obtained with synthetic resin, the said central portion (4) consisting of a plate including a plurality of mother-of-pearl flakes (8) and this third portion (6) consisting of a layer of transparent synthetic resin.

2. The lining and flooring tile (1) according to claim 1 wherein the synthetic resin is an epoxy resin.

3. The lining and flooring tile (1) according to claim 2 wherein the epoxy resin of this base portion (2) is loaded with calcium carbonate (CaCo₃) or with other suitable elements to obtain chromatic-artistic effects.

4. The lining and flooring tile (1) according to claim 2 wherein the quantity of calcium carbonate ranges within 1000g and 3000g for 1200g of epoxy resin.

5. The lining and flooring tile (1) according to claim 3 wherein the quantity of calcium carbonate equals 2000g.

6. The lining and flooring tile (1) according to claim 2 wherein the quantity of elements that are fit to obtain valuable chromatic-artistic effects ranges between 1000g and 3000g for 1200g of epoxy resin.

7. The lining and flooring tile (1) according to whichever of the previous claims wherein the mother-of-pearl flakes (8) are glued to one another.

8. The lining and flooring tile (1) according to claim 6 wherein the gluing of the flakes (8) is carried out by means of a microgluing process.

9. The lining and flooring tile (1) according to whichever of the previous claims wherein the flakes (8) present a thickness ranging between 0,1 mm and 0,5 mm and preferably equals 0,2mm.

10. The lining and flooring tile (1) according to whichever of the previous claims wherein the plate that makes the central portion (4) is a rectangle of 240 mm in length and 140 mm in width.

11. The lining and flooring tile (1) according to whichever of the previous claims wherein the plate that makes the central portion (4) features the shape and the size of the lining and flooring tile (1) to be obtained.

12. The lining and flooring tile (1) according to whichever of the previous claims wherein the surface of the tile is finished by means of passes of abrasive paper featuring 600 or 800 in particle size.

13. The lining and flooring tile (1) according to whichever of the previous claims wherein the surface of the tile is polished until it shines by means of a wad and abrasive paste.

14. A method to obtain a lining and flooring tile (1) according to whichever of claims 1 to 16 including the following steps:
a) reduction of shells into flaks 8 after a careful selection;
b) gluing of flakes (8), by means of microgluing, so as to obtain a plate;
c) location into a mould of a preset quantity of epoxy resin loaded with calcium carbonate to obtain the base portion (2);
d) wait until the epoxy resin becomes a gel;
e) location, over the epoxy resin, which has turned into a gel, of the plate obtained in the previous steps a) and b) to obtain the central portion 4;
f) location, by casting, of a preset quantity of transparent epoxy resin to obtain the third portion (6), and its hardening;
g) finishing of the surface of the third portion (6) by means of abrasive paper;
h) polishing of the surface of the third portion (6) until it shines by means of a wad and abrasive paste.

15. A method to obtain a lining and flooring tile (1) according to claim 13 wherein steps a) and b) to obtain the plate that will become the central portion (4) are carried over separately from the following stages.

## Amended claims

### Amended claims in accordance with Rule 137(2) EPC.

**1.** A lining and flooring tile (1) incorporating mother-of-pearl flakes, said tile comprising a base portion (2) consisting of at least one layer obtained with synthetic resin, and a covering portion (6) consisting of a layer of transparent synthetic resin,
**characterised in that**
said mother-of-pearl flakes are flakes of very small thickness that are incorporated in a third portion (4) sandwiched between said base and covering portions and formed as a plate including a plurality of mother-of-pearl flakes (8) glued to one another by means of a microgluing process.

**2.** A lining and flooring tile (1) according to claim 1 wherein the thickness of said mother-of-pearl flakes (8) is comprised between 0,1 mm and 5 mm.

**3.** The lining and flooring tile (1) according to claim 1 or 2 wherein said synthetic resin is an epoxy resin.

**4.** The lining and flooring tile (1) according to claim 3 wherein the epoxy resin of this base portion (2) is loaded with calcium carbonate (CaCo₃).

**5.** The lining and flooring tile (1) according to claim 4 wherein the amount of calcium carbonate ranges within 1000g and 3000g for 1200g of epoxy resin.

**6.** The lining and flooring tile (1) according to claim 5 wherein the amount of calcium carbonate equals 2000g.

**7.** The lining and flooring tile (1) according to claims 2 to 6 wherein said flakes (8) have a thickness of 0,2 mm.

**8.** The lining and flooring tile (1) according to any of the preceding claims wherein the plate that makes the central portion (4) is a rectangle of 240 mm in length and 140 mm in width.

**9.** The lining and flooring tile (1) according to any of the preceding claims wherein the plate that makes the central portion (4) features the shape and the size of the lining and flooring tile
(1) to be obtained.

**10.** A method to obtain a lining and flooring tile (1) incorporating mother-of-pearl flakes according to any of the preceding claims, said method including the following steps:
a) reducing carefully selected shells of mother-of-pearl into very thin flakes (8);
b) microgluing said flakes (8) to one another so as to obtain a single plate that will become said central portion (4);
c) loading a preset amount of epoxy resin filled with calcium carbonate into a mould;
d) waiting until the epoxy resin becomes a gel;
e) deposing over said epoxy resin turned into a gel, the plate obtained in the previous steps a) and b);
f) disposing, by casting, a preset amount of transparent epoxy resin to obtain said third portion (6), and hardening said portion;
g) finishing the surface of the third portion (6) by means of abrasive paper;
h) polishing the surface of said third portion (6) until it shines by means of a wad and abrasive paste.

**11.** A method according to claim 10 wherein steps a) and b) to obtain the plate that will become the central portion (4) are carried over separately from the following stages.
